# EUROPEAN PATENT SPECIFICATION

(11) **EP 3 771 922 B1**
(45) Date of publication and mention of the grant of the patent: **30.03.2022**
(21) Application number: 20187929.3
(22) Date of filing: 27.07.2020
(51) Int. Cl.: G01S 7/497, G01S 13/931, G01B 11/275, G01S 7/40, G01S 17/42

(54) **METHOD, APPARATUS AND COMPUTER PROGRAMME FOR CALIBRATING AN ADAS SENSOR OF A VEHICLE, AND METHOD OF CHARACTERIZING A SERVICE SURFACE FOR CALIBRATING AN ADAS SENSOR OF A VEHICLE**
VERFAHREN, VORRICHTUNG UND COMPUTERPROGRAMM ZUR KALIBRIERUNG EINES ADAS-SENSORS EINES FAHRZEUGS UND VERFAHREN ZUR CHARAKTERISIERUNG EINER SERVICEFLÄCHE ZUR KALIBRIERUNG EINES ADAS-SENSORS EINES FAHRZEUGS
PROCÉDÉ, APPAREIL ET PROGRAMME INFORMATIQUE POUR CALIBRER UN CAPTEUR ADAS D'UN VEHICULE, ET PROCÉDÉ DE CARACTÉRISATION D'UNE SURFACE DE SERVICE PERMETTANT DE CALIBRER UN CAPTEUR ADAS D'UN VEHICULE

(30) Priority: 29.07.2019 IT 201900013173
(43) Date of publication of application: 03.02.2021
(73) Proprietor: NEXION S.p.A., 42015 Correggio (RE) (IT)
(72) Inventor: CORGHI, Giulio, 42015 CORREGGIO (Reggio Emilia) (IT)
(74) Representative: Conti, Marco

(56) References cited:
- CN-A- 109 584 306
- US-A1- 2018 100 783
- US-A1- 2019 204 427

## Description

This invention relates to a method and an apparatus for calibrating an advanced driver assistance (ADAS) sensor of a vehicle. The invention also relates to a method for characterizing a service surface of a service area. In particular, the field of this application is the calibration or alignment of the vehicle's sensors such as, for example, radar sensors, LIDAR sensors, optical sensors (cameras) or other sensors used in safety systems to prevent frontal collisions, in lane detection systems, in cruising speed control systems, in safe stopping distance systems or in other systems.

In the field of driver assistance systems, target units used in procedures for aligning and calibrating the sensors of advanced driver assistance systems may be mounted on trolley-like structures. These structures must be positioned in front of the vehicle at a predetermined distance and oriented in a predetermined manner relative to the vehicle. Indeed, every vehicle manufacturer specifies the optimal position of the target unit; for each vehicle, therefore, the operator responsible for calibration has to move the structure to the optimum position specified by the manufacturer of the vehicle.

Patent document WO2018/167809A1 discloses a structure on which a target unit is mounted: the target unit is used in procedures for aligning and calibrating ADAS sensors and comprises an alignment system configured to align the calibration device with a longitudinal axis of the vehicle. Patent document US9794552B1 discloses a calibrator including a calibration image which must be aligned with a camera of the vehicle both in a left-to-right direction and in a top-to-bottom direction.

Patent document US20180100783A1 discloses a procedure for aligning ADAS sensors where images providing the operator with observable indicia (such as messages, for example) are projected on a service surface; according to the document, the shape or configuration of these images can be modified in such a way that the images are not altered by uneven or irregular features that may be present locally in the zone of the service surface on which the images are projected; the document does not, however, make any mention of how the position of the calibration devices can be varied in the presence of irregular features on the service surface.

In effect, the optimum position at which the structure can be placed may vary and/or may be difficult to determine precisely if the service surface differs (even slightly) in shape from that specified by the manufacturer. For example, if the service surface which the vehicle rests on does not define a perfectly horizontal plane, the structure will not be oriented correctly relative to the vehicle and the more the surface deviates from the horizontal, the greater the orientation error will be.

Other procedures for aligning ADAS sensors are disclosed in the following patent documents: CN109584306A; US2018100783A1; US2019/204427 A1.

This disclosure has for an aim to provide a method and an apparatus for calibrating an advanced driver assistance (ADAS) sensor of a vehicle to overcome the above mentioned drawbacks of the prior art. Another aim of this disclosure is to provide a computer program that overcomes the above mentioned disadvantages of the prior art. Another aim of this disclosure is to provide a method for characterizing a service surface of a service area to overcome the above mentioned disadvantages of the prior art.

These aims are fully achieved by the method for calibrating an ADAS sensor, by the apparatus for calibrating an ADAS sensor, by the computer program and by the method for characterizing a service surface of a service area, as characterized in the appended claims.

This disclosure has for an object a method for calibrating an advanced driver assistance (ADAS) sensor of a vehicle. The method is implemented by a calibrating apparatus including a support structure and a calibration device mounted on the support structure. During the execution of the method (or certain steps of the method), the vehicle is operatively rested on a service surface of a service area. The service surface may be defined, for example, by the floor of a car repair shop.

The method comprises a step of a control unit generating positioning data to facilitate positioning a support structure at a working position in proximity to the service area (at a position in front of the vehicle).

The method comprises a step of sending a calibration command to an electronic control unit of the vehicle to determine an interaction between the ADAS sensor and the calibration device.

The method comprises a step of processing data received from the electronic control unit of the vehicle in order to generate calibration data.

The control unit (in the step of generating) retrieves characterization data, previously saved and representing a position of the service surface relative to a spatial reference system, and generates the positioning data as a function of the characterization data. The characterization data, saved (to a database, for example) indicate a shape of the service surface. Thus, positioning the support structure takes into account the position of the service surface relative to a spatial reference system. The spatial reference system may be absolute (for example, it may include a vertical reference axis, parallel to the weight force). In an embodiment, the spatial reference system includes a Cartesian reference system (preferably three-dimensional).

In an embodiment, the spatial reference system includes a horizontal reference plane. By horizontal reference plane is meant a plane having a predetermined orientation relative to a vertical axis (parallel to the weight force); preferably, the horizontal reference plane is at right angles to the vertical axis. The control unit generates the positioning data as a function of a deviation between the service surface and the horizontal reference plane. The deviation may be determined by an inclination of the service surface relative to the horizontal reference plane along a longitudinal direction and/or along a transverse direction (at right angles to the longitudinal direction). Both the longitudinal direction and the transverse direction are perpendicular to the vertical axis. Thus, the horizontal reference plane is preferably parallel to the longitudinal direction and to the transverse direction. In an embodiment, the service surface is defined by a plane (service plane) that approximates the spatial position (that is, the points) of the service surface on which the wheels of the vehicle rest during the calibration of an ADAS sensor.

In an embodiment, the positioning data include one or more correction factors to assist with the positioning of the support structure at the working position to allow correcting an inclination value provided by one or more inclination indicators included in the calibrating apparatus. By "inclination indicators" is meant mechanical or electronic levels (or inclinometers), associated with the support structure; preferably, the inclination indicators are integral with the calibration device. In an embodiment, a longitudinal inclination indicator is used to detect the inclination of the support structure, or of the calibration device, relative to the horizontal reference plane, along the longitudinal direction, and/or a transverse inclination indicator is used to detect the inclination of the support structure, or of the calibration device, relative to the horizontal reference plane, along the transverse direction.

The correction factors indicate a reference inclination at which the one or more inclination indicators must be positioned to compensate for the inclination of the service surface relative to the reference surface. For example, if the service surface is inclined by 0.2° relative to the horizontal reference plane (along the longitudinal direction), the reference inclination will be 0.2° (along the longitudinal direction); thus, even if the service surface has an irregular shape, the support structure, and more specifically, the calibration device, when at the working position, will be oriented according to the manufacturer-specified inclination relative to the service surface (or relative to a plane that approximates the service surface); in particular, manufacturers specify that both the support structure and the vehicle must be positioned on a horizontal, planar surface so that the support structure is perpendicularly inclined to the service surface; the calibration device is therefore oriented in such a way that it can be seen correctly by the ADAS sensor of the vehicle. The correction factors are thus used to correct the inclination of the support structure when the service surface is not planar and horizontal. In an embodiment, the correction factors are communicated to an operator through a user interface.

The positioning data may include further correction factors to allow correcting a distance of the calibration device from the service surface; in effect, the support structure is configured to allow vertically adjusting the position of the calibration device.

In an embodiment, the method comprises a step of moving the support structure (or the calibration device). In an embodiment, the support structure (or the calibration device) is moved manually by the operator until the one or more inclination indicators indicate the reference inclination. The movement may include one or more of the following movements: movement of the support structure and/or of the calibration device along a vertical axis to adjust its vertical distance relative to the service surface, movement along a transverse direction and/or a longitudinal direction, to adjust the distance from the vehicle, tilt of the calibration device about a vertical axis, tilt of the calibration device about a transverse axis, tilt of the calibration device about a longitudinal axis.

In an embodiment, the correction factors are used by the control unit to correct an offset of the one or more inclination indicators. In this embodiment, each inclination indicator shows the operator an inclination value which takes into account the position of the service surface relative to the reference plane (more specifically, it indicates a 0° inclination when the structure is perpendicular to the service surface). Thus, in this embodiment, the operator must move the support structure (or the calibration device) until the one or more inclination indicators indicate a 0° inclination.

In an embodiment, the one or more correction factors are (also) configured to correct a vertical adjustment of the support structure to vary the height of the calibration device relative to the service surface.

In an embodiment, the movement of the support structure (or of the calibration device) is performed by one or more actuators connected to the control unit; the one or more actuators move the support structure as a function of the correction factors. More specifically, the one or more actuators receive the correction factors from the control unit and move the support structure (or the calibration device) to compensate for the inclination of the service surface relative to the reference surface. Thus, the support structure, and more specifically, the calibration device, when at the working position, will be oriented perpendicularly to the service surface (or to a plane that approximates the service surface). In an embodiment, the one or more actuators move one or more supporting feet of the support structure. In an embodiment, the one or more actuators move a carriage which is slidably coupled to the support structure to move the calibration device relative to the support structure. In an embodiment, the one or more actuators modify the inclination, both longitudinal and transverse, of the calibration device relative to the support structure.

In an embodiment, the control unit has access to a database containing a plurality of characterization datasets. The database may also include a manufacturer-specified distance between the support structure and the vehicle. The method may comprise a step of receiving vehicle information in the control unit and a step of querying the database to select a characterization dataset from the plurality of characterization datasets, based on the vehicle information and/or a calibrating apparatus type (by type is meant a target panel with predetermined graphical features, or a reflector, etc.).

It should be noted that the vehicle comprises a pair of front wheels, including a right-hand front wheel and a left-hand front wheel; the vehicle also includes a pair of rear wheels, including a right-hand rear wheel and a left-hand rear wheel. The vehicle information may also include the distance between the pair of front wheels and the pair of rear wheels and/or the distance between the right-hand front wheel and the left-hand front wheel of the vehicle. The vehicle information may include the location of the vehicle within the service area relative to the spatial reference system. In effect, the wheel support points on the service surface vary according to the location of the vehicle and the distance between the vehicle wheels. If the service surface has an irregular shape (with humps and dips, for example), the inclination the vehicle will be subjected to may vary appreciably according to which points on the service surface the wheels rest on. Thus, a database is used to collect a plurality of characterization datasets, each representing a position of a respective approximation of the service surface relative to the spatial reference system (or to the horizontal reference plane) and, for each vehicle, the characterization dataset which provides the approximation of the service surface that is closest to the plane defined by the points on which the vehicle is supported.

In an embodiment, the calibration device includes a target panel having a surface bearing a combination of predetermined graphical features visible to a vehicle camera in response to the calibration command. In this embodiment, the calibration device is configured to calibrate an ADAS camera of the vehicle.

In an embodiment, the target panel is defined by a surface (rigid or roll-up) on which the combination of graphical features is printed.

In an embodiment, the target panel is defined by a monitor (or screen) on which the combination of graphical features is displayed. In an embodiment, the target panel is defined by a surface on which the combination of graphical features is projected (by a projector). In these embodiments, the control unit displays on the target panel an image which provides the combination of graphical features. The control unit perspectively deforms the image as a function of the characterization data; that way, the image shown on the target panel is distorted to (partly or completely) compensate for the inclination of the service surface relative to the horizontal reference plane. In this case too, the image can be subjected to different degrees of distortion, depending on the location of the apparatus for calibrating the ADAS sensor and/or the vehicle in the service area and/or the distance between the front and rear wheels and/or left and right wheels of the vehicle.

In an embodiment, the calibration device includes a reflector having a metallic surface or a surface capable of reflecting electromagnetic waves at the frequencies at which ADAS radar sensors work. In this embodiment, the calibration device is configured to facilitate alignment or calibration of a radar sensor of the vehicle's advanced driver assistance system.

In an embodiment, the calibration device includes a target panel configured to calibrate a LIDAR sensor of the advanced driver assistance system of the vehicle. The target panel for calibrating a LIDAR sensor is reflective in one embodiment and retroreflective in another embodiment.

In an embodiment, the calibration device includes a device configured to calibrate or align an infrared ADAS sensor.

In an embodiment, the method comprises a step of characterizing the service surface. The step of characterizing the service surface includes a step of receiving in the control unit measurement data representing a vertical distance of at least three points of the service surface relative to a horizontal reference plane. Preferably, the measurement data represent the positions of the at least three points in the spatial reference system and, more specifically, the three-dimensional Cartesian coordinates of the at least three points (a first coordinate is defined by the vertical distance, a second coordinate is defined by a transverse distance, a third coordinate is defined by a longitudinal distance). The step of characterizing the service surface includes a step of processing the measurement data to generate the characterization data. In an embodiment, the step of processing the measurement data includes a step of deriving a service plane which approximates the service surface. Thus, the positioning data are generated as a function of an inclination of the service plane relative to the horizontal reference plane (more specifically, a longitudinal inclination and a transverse inclination).

The step of characterizing the service surface includes a step of saving the characterization data (to a memory accessible by the control unit). That way, the characterization data are made available for generating the positioning data.

In an embodiment, the measurement data represent a vertical distance of at least four points of the service surface relative to a horizontal reference plane; preferably, the measurement data represent three-dimensional coordinates (in the Cartesian reference system: vertical distance, longitudinal distance and transverse distance) of the at least four points. Thus, the aforesaid at least three points are defined by these four points. More specifically, the measurement data represent the positions of the four points in the spatial reference system and, still more specifically, the three-dimensional Cartesian coordinates of the four points. In an embodiment, the service plane is derived by an operation of minimizing the (mean) quadratic errors between the service plane and the three-dimensional coordinates of the at least four points.

In an embodiment, the service surface includes a reference element visible to the operator. Two of the at least four points are located at a predetermined position relative to the reference element. During interaction between the ADAS sensor and the calibration device, the vehicle is located on the service surface at a predetermined position relative to the reference element. In particular, the vehicle has at least two wheels (for example, the front wheels) located on the service surface at a predetermined position relative to the reference element (for example, above or below the reference element).

The reference element may be a mark painted on the service surface, or a stake or any other element that allows unambiguously marking out a point or zone of the service surface. In particular, in an embodiment, the reference element may be defined by a stripe painted on the service surface and on which the operator can position the front or rear wheels of the vehicle.

In an embodiment, the step of characterizing includes a step of capturing measurement data. In an embodiment, the measurement data are captured by emitting a light beam directed at a graduated rod oriented along a vertical direction and resting on the service surface at one of the at least three points. Preferably, the light beam is directed in parallel with the horizontal reference plane (or has a predetermined inclination relative thereto). The light beam has a known height relative to the horizontal reference plane; preferably, the light beam is emitted in the reference plane. The operator can read the distance directly off the graduated rod, where the light beam strikes the graduated rod; the operator (or the control unit) can thus derive the vertical dimension of each point, based on the height of the light beam relative to the reference plane.

In an embodiment, the light beam is generated by a distance meter. The distance meter may be mounted on the trolley at different positions (for example, at a first and a second end of a horizontal bar of the trolley). The distance meter is associated with an inclination indicator (that is, a mechanical or electronic level) so as to emit the light beam in parallel with the horizontal reference plane. The step of characterizing may also include a step of capturing with the distance meter at least one horizontal distance (transverse or longitudinal) for one or more of the at least three points. In effect, the distance meter can be placed at a known position (which may change from one point to another) and the laser beam emitted along the transverse direction, or along the longitudinal direction, in order to detect, through the distance meter, a transverse distance or a longitudinal distance of the graduated rod from the known position where the distance meter is placed; at the same time, the distance can be read off the graduated rod, where the laser beam strikes the graduated rod.

In an embodiment, the measurement data can be captured by three-dimensional scanning of the service surface; the three-dimensional scanning can be carried out with a profile meter.

In an embodiment, the measurement data can be captured by measuring heads associated with the wheels of the vehicle; each measuring head includes emitters/receivers for detecting the other measuring heads and also a distance meter directed downwards to detect the distance from the service surface.

In an embodiment, the measurement data can be captured by means of targets associated with the wheels of the vehicle; the targets are viewed by a plurality of cameras in a stereo configuration in order to determine the position of the targets in the spatial reference system. In an embodiment, each target comprises a distance meter directed downwards to detect the distance from the service surface.

In an embodiment, the apparatus comprises a positioning device configured to aid with the relative positioning between the vehicle and the support structure; the support structure is provided with a further combination of predetermined graphical features, different from the combination of predetermined graphical features visible to the cameras of the vehicle; in this embodiment, the positioning device is spaced from the support structure and includes an optical device operatively oriented towards the service area to see graphical features of the vehicle and a matching camera oriented towards the support structure to see the second combination of predetermined graphical features.

In an embodiment, capturing the measurement data includes positioning a first and a second spacer on the service surface in such a way that a characterization bar connected to the first and the second spacer (resting on them) is oriented along a longitudinal direction of the service area. The step of capturing the measurement data includes measuring a first inclination of the characterization bar oriented along the longitudinal direction. The step of capturing the measurement data then includes positioning the first and the second spacer on the service surface in such a way that the characterization bar is oriented along a transverse direction of the service area (it should be noted that this is equivalent to using a further bar and further spacers). Preferably, the transverse direction is perpendicular to the longitudinal direction. The step of capturing the measurement data includes measuring a second inclination of the characterization bar oriented along the transverse direction. A distance between the first and the second spacer is known and is, preferably, adjustable (in particular, at least one of the spacers is slidable along the characterization bar and the characterization bar is provided with a graduated scale and/or one of the spacers includes a distance meter to measure the distance from the other distance meter). In an embodiment, the first and the second spacer are positioned at a first distance during measurement of the first inclination and at a second distance during measurement of the second inclination. The step of characterizing then includes processing the first inclination and the second inclination, as a function of the distance between the first and the second spacer during measurement of the first and the second inclination, in order to derive the service plane. Preferably, in order to find the position of the four points, at least a third measurement is performed (for example, four measurements can be performed: two measurements in the longitudinal direction and two in the transverse direction).

In an embodiment, the service surface is defined by a vehicle lift that may be positioned in a plurality of operating configurations (at different vertical distances). The step of characterizing may be repeated in two or more of the operating configurations and/or with two or more different loads placed on the vehicle lift. In effect, the vehicle lift bends differently at different distances and under different loads and it is therefore necessary to determine a plurality of different characterization datasets.

This disclosure also relates to an apparatus for calibrating an advanced driver assistance (ADAS) sensor of a vehicle. The vehicle is operatively rested on a service surface of a service area. The apparatus comprises a support structure. The support structure is preferably movable on wheels or on a guide. The apparatus comprises a calibration device mounted on the support structure.

The apparatus comprises a control unit configured to generate positioning data to facilitate positioning the support structure at a working position in proximity to the service area. The control unit has access to a memory containing characterization data that represent a position of the service surface relative to a spatial reference system. The control unit is configured to retrieve the characterization data from the memory and to generate the positioning data as a function of the characterization data.

In an embodiment, the spatial reference system includes a horizontal reference plane; the control unit is configured to generate the positioning data as a function of a deviation (or an inclination) between the service surface and the horizontal reference plane.

In an embodiment, the apparatus comprises one or more inclination indicators, connected to the support structure (or to the calibration device) and configured to detect an inclination of the support structure (or of the calibration device) relative to the spatial reference system (or relative to the horizontal reference plane) to assist with the positioning of the support structure at the working position. The positioning data include one or more correction factors for the one or more inclination indicators.

In an embodiment, the apparatus comprises one or more actuators connected to the control unit and configured to move the support structure (or the calibration device) so as to modify its inclination (transverse and/or longitudinal) relative to the horizontal reference plane. The control unit is configured to drive the one or more actuators as a function of the correction factors.

In an embodiment, the control unit has access to a database containing a plurality of characterization datasets.

The control unit is configured to receive vehicle information and to query the database to select a characterization dataset from the plurality of characterization datasets, based on the vehicle information. The vehicle information may include the distance between the pair of front wheels and the pair of rear wheels and/or the distance between the right-hand front wheel and the left-hand front wheel of the vehicle and/or the distance between the support structure (or the calibration device) and the vehicle. The vehicle information may include the location of the vehicle within the service area relative to the spatial reference system.

In an embodiment, the apparatus comprises a scanner configured to read the registration number or other code correlated with the make, model and/or owner of the vehicle. The control unit may be configured to query the vehicle's control unit to retrieve the vehicle's identification code or VIN. The apparatus may comprise a user interface. In an embodiment, the user interface is configured to receive the vehicle's identification code or VIN and/or the registration number and/or the code correlated with make, model and/or owner of the vehicle.

The control unit may be configured to query the database (or a further database) to retrieve the vehicle information (in particular, the distance between the pair of front wheels and the pair of rear wheels and/or the right-hand front wheel and the left-hand front wheel of the vehicle) as a function of the vehicle's identification code or VIN and/or of the registration number or code correlated with the make, model and/or owner of the vehicle.

In an embodiment, the user interface is configured to receive the vehicle information from the operator and to transmit them to the control unit.

In an embodiment, the apparatus comprises a camera configured to view the service area; the control unit may be configured to derive, from the images captured by the camera, the information relating to the location of the vehicle within the service area.

In an embodiment, the calibration device includes a target panel, bearing a combination of predetermined graphical features visible to a vehicle camera. In an embodiment, the target panel may be defined by a surface (rigid or roll-up) on which the combination of graphical features is printed. In an embodiment, the target panel is a monitor (or screen) on which the combination of graphical features is displayed. In an embodiment, during the step of positioning the vehicle in the service area, the monitor may display the images captured by the camera, thereby guiding the operator in positioning the wheels at the reference element. In an embodiment, the target panel is defined by a surface on which the combination of graphical features is projected (by a projector connected to the control unit and included in the apparatus). In these embodiments, the control unit may be configured to display on the target panel an image which provides the combination of graphical features and to perspectively deform the image as a function of the characterization data.

In an embodiment, the control unit is configured to characterize the service surface. More specifically, the control unit may be configured to receive (for example, from the user interface) measurement data representing a vertical distance (as well as a transverse distance and a longitudinal distance) of at least three points of the service surface relative to the horizontal reference plane and to process the measurement data in order to generate the characterization data. In particular, in an embodiment, the control unit is configured to process the measurement data to derive a service plane approximating the service surface (for example, in the case where the at least three points are defined by at least four points, the control unit is configured to derive the service plane by a calculation that minimizes the (mean) quadratic errors between the plane and the three-dimensional coordinates of the points - a 3D calculation corresponding to an operation of 2D linear regression). In this embodiment, the control unit generates the positioning data as a function of an inclination of the service plane relative to the horizontal reference plane.

The control unit may also be configured to save the characterization data to the database. Thus, once characterization has been carried out, the database is populated with the characterization data which will subsequently be used for positioning the vehicles and/or the supporting structure in order to calibrate the ADAS sensors.

In an embodiment, the apparatus comprises a reference element visible to the operator. For example, the reference element may include a stripe painted on the service surface. The reference element is configured to help the operator position the vehicle in the service area.

In an embodiment, the apparatus comprises a distance meter which can be associated with an inclination indicator to emit a laser beam with a predetermined orientation. In an embodiment, the apparatus comprises one or more graduated rods which can be positioned on the service surface oriented along a vertical direction.

This disclosure also relates to a computer program comprising operating instructions configured to carry out one or more of the steps of the method according to one or more aspects of this disclosure (specifically when run on a control unit of an apparatus according to one or more aspects of this disclosure).

This disclosure also relates to a method for characterizing a service surface of a service area. The characterizing method comprises a step of capturing measurement data representing a vertical distance of at least three points of the service surface relative to a horizontal reference plane. The characterizing method comprises a step of processing the measurement data to generate the characterization data representing a deviation of the service surface relative to the horizontal reference plane. The characterizing method comprises a step of storing the characterization data in a memory. In addition, one or more of the aspects described in this disclosure in connection with the method for calibrating an ADAS sensor can also be applied to the characterizing method.

These and other features will become more apparent from the following detailed description of a preferred, non-limiting embodiment, illustrated by way of example in the accompanying drawings, in which:

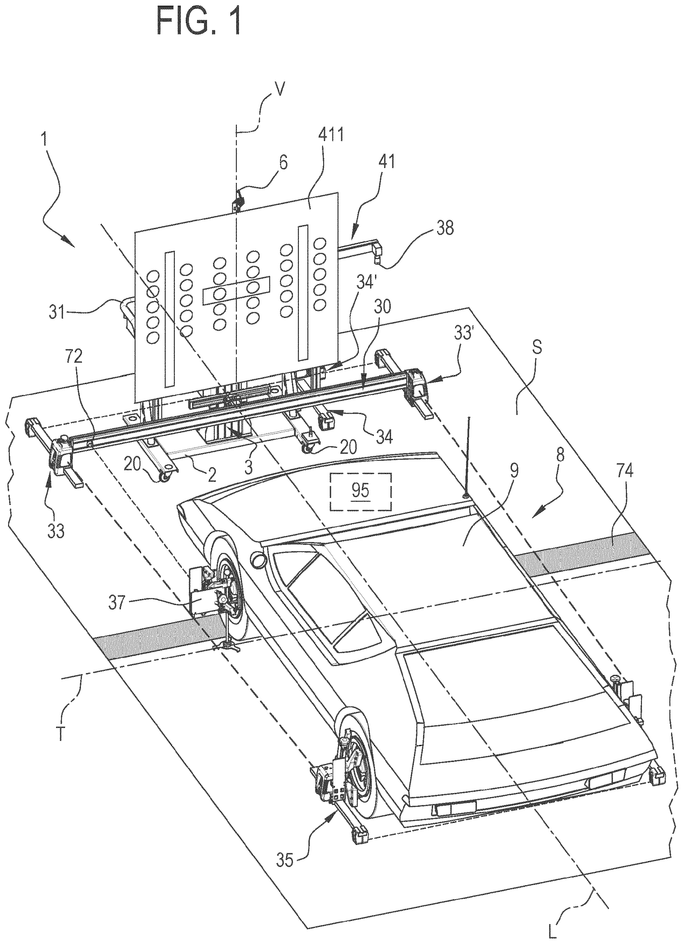

- Figure 1 shows an apparatus according to this disclosure for calibrating an ADAS sensor of a vehicle positioned in a service area;

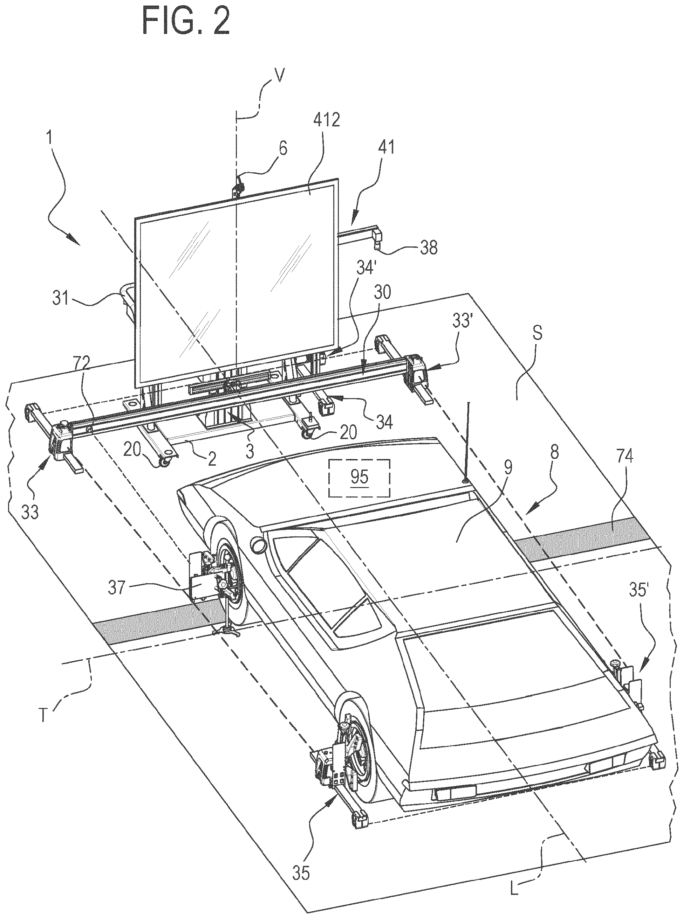

- Figure 2 shows the apparatus of Figure 1 according to a variant embodiment;

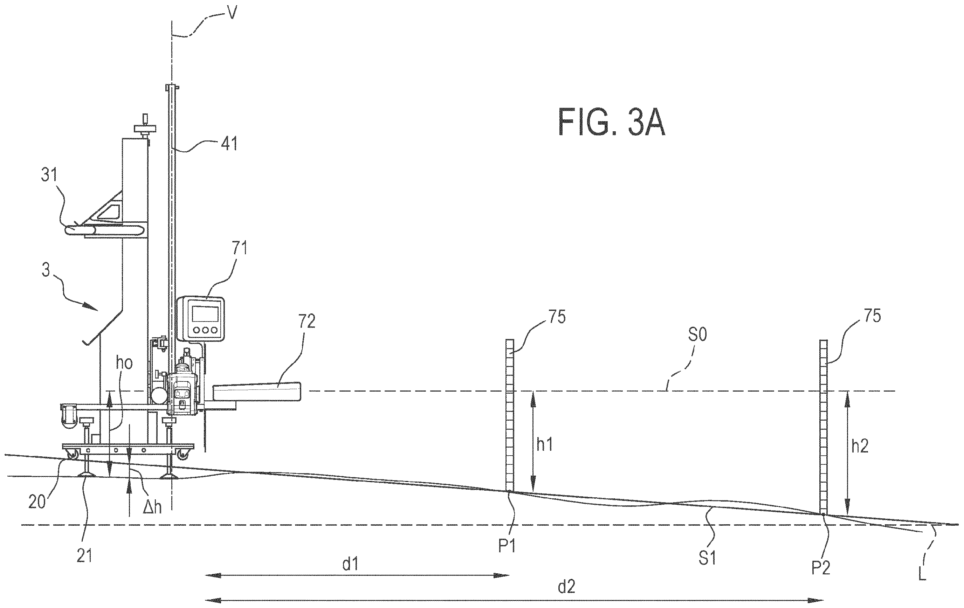

- Figure 3A shows the apparatus of Figure 1 during a step of characterizing a service surface of the service area;

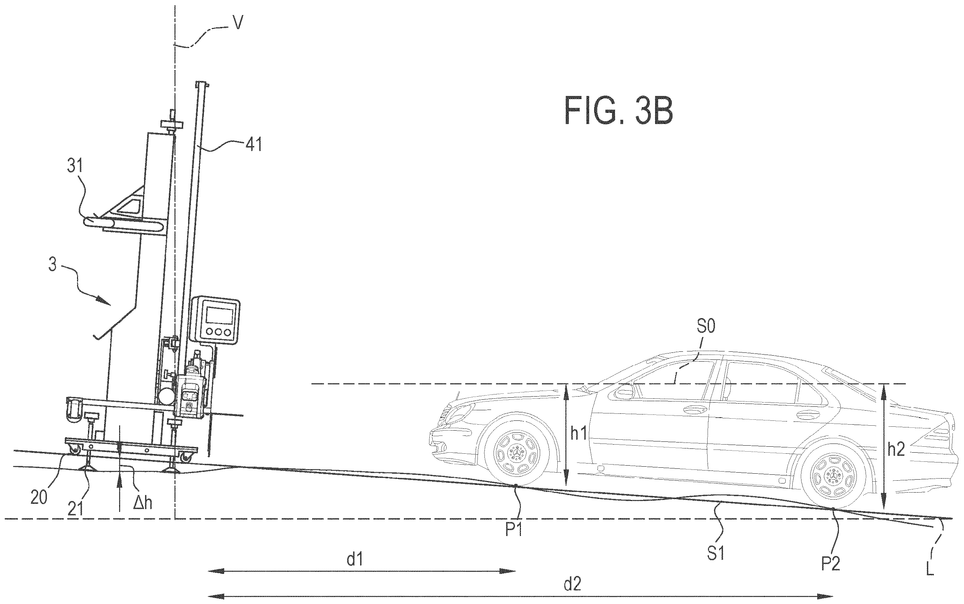

- Figure 3B shows the apparatus of Figure 1 during a step of calibrating the ADAS sensor of the vehicle;

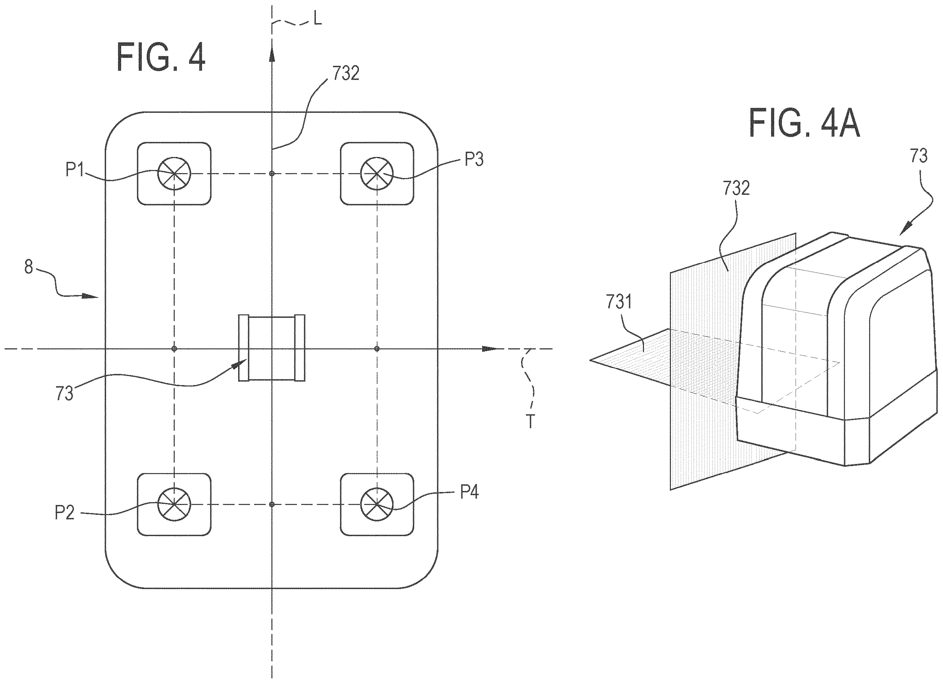

- Figures 4 and 4A show a laser blade emitter used, in a variant embodiment, for characterizing the service surface of the service area;

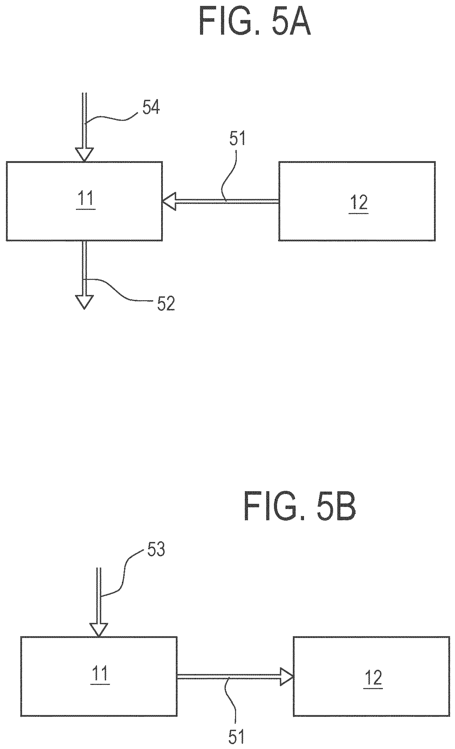

- Figure 5A schematically illustrates a control unit of the apparatus of Figure 1 during a step of generating positioning data;
- Figure 5B schematically illustrates a control unit of the apparatus of Figure 1 during the step of characterizing;

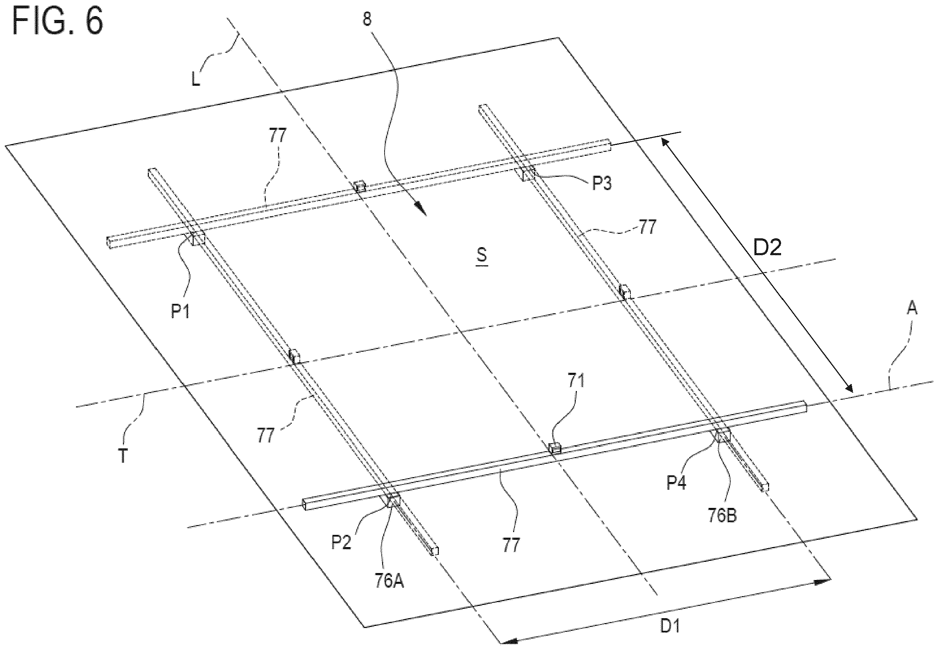

- Figure 6 shows a bar used in a possible mode of characterizing the service surface of the service area.

With reference to the accompanying drawings, the numeral 1 denotes an apparatus for calibrating an advanced driver assistance (ADAS) sensor of a vehicle 9. The vehicle 9 is operatively rested on a service surface S of a service area 8.

The apparatus 1 comprises a support structure 3. The support structure 3 comprises a mobile base unit 2. The base unit 2 includes a plurality of wheels 20. The wheels 20 of the plurality rotate or are rotatable about respective axes of rotation. The wheels 20 also swivel about respective swivel axes, oriented perpendicularly to the respective axes of rotation. The swivel axis of each wheel is at right angles (or substantially at right angles) to the respective axis of rotation. Preferably, the swivel axis is oriented along a vertical direction, parallel to the weight force (or along a substantially vertical direction). In an embodiment, the base unit 2 comprises two or more supporting feet 21. The one or more supporting feet 21 are movable between a raised position and a lowered position. The supporting feet 21 may be moved by hand or through actuators controlled by the operator or by a processing unit (which may integrated in the control unit 11). When the support structure 3 is being moved, the supporting feet 21 are kept in the raised position; once the support structure 3 has reached the working position, the supporting feet 21 are lowered to lock the base unit 2 in place.

At the lowered position, each supporting foot 21 may also serve as a pivot for rotating the support structure 3. In an embodiment, each supporting foot 21 includes a locking device configured to lock the foot 21 at the lowered position (or at the raised position).

Preferably, the one or more supporting feet 21 are movable to a plurality of intermediate positions, between the raised position and the lowered position. More specifically, the one or more supporting feet 21 are movable independently of each other to vary the height and/or inclination of the support structure 3 relative to the service surface S.

The apparatus 1 comprises a calibration device 41 mounted on the support structure 3. In an embodiment, the calibration device 41 includes (or is defined by) a target panel 411 bearing predetermined graphical features to perform (or assist with the) calibration of a camera of the vehicle 9. In an embodiment, the calibration device 41 includes (or is defined by) a monitor 412 on which predetermined graphical features are displayed.

In an embodiment not illustrated, the calibration device 41 includes (or is defined by) a reflector panel configured to perform (or assist with the) calibration of a radar sensor of the vehicle 9.

In an embodiment, the calibration device 41 includes a carriage which is slidably coupled to the support structure 3. More specifically, the carriage is slidable in a vertical direction V to adjust the calibration device 41 in height relative to the support structure 3. In an embodiment, the apparatus 1 includes a height distance meter 38 mounted on the vehicle calibration assistance structure 9 and directed towards the surface the base unit 2 rests on in order to measure the height of the calibration device 41 from that surface.

In an embodiment, the calibration device 41 is tiltable relative to the support structure 3 (about a vertical tilting axis V and/or about a longitudinal tilting axis L, perpendicular to the vertical tilting axis V, and/or about a transverse tilting axis T, perpendicular to the vertical tilting axis V and to the longitudinal tilting axis L) in order to vary the orientation of the calibration device 41 relative to the support structure 3. The calibration device 41 may be tilted manually by the operator by means of specific hand-operated actuators or by means of specific actuators connected to the control unit 11.

In an embodiment, the apparatus 1 comprises an optical projection system which includes a laser emitter 6. The laser emitter 6 is configured to project a laser blade or laser beam 6 on the vehicle 9 which is positioned in the service area 8. The laser emitter 6 is positioned at the top of the calibration device 41 and is centred along the vertical direction V.

The support structure 3 includes a grippable portion 31, which is configured to allow (or make it easier for) the operator to grip it with at least one hand.

The support structure 3 comprises a distance meter 72, mounted on the support structure 3 (specifically, on a horizontal bar 30 of the support structure 3). The distance meter 72 is configured to detect a positioning target element 37 associated with a wheel of the vehicle 9 (preferably a front wheel).

In one or more embodiments, the apparatus comprises a first pair of measuring heads 34, 34' configured to be mounted on respective front wheels of the vehicle 9 and a second pair of measuring heads 35, 35' configured to be mounted on respective rear wheels of the vehicle 9. The measuring heads 34, 34', 35, 35' of the first and second pair of measuring heads each include an emitter and/or a receiver. The apparatus 1 comprises a control unit 11. The control unit 11 is associated with the support structure 3.

The control unit 11 configured to generate positioning data 52 to facilitate positioning the support structure 3 at a working position in proximity to the service area 8. When generating the positioning data 52, the control unit 11 is configured to communicate with the measuring heads 34, 34', 35, 35' of the first and second pair of measuring heads.

For these emitters / receivers of the measuring heads 34, 34, 35, 35', different technological solutions may be used: for example, CCD and/or laser and/or LED. More specifically, in an embodiment, LED emitters and CCD receivers are used.

The measuring heads of the first and second pair of measuring heads each include a first and a second end; the first and second ends are each provided with a receiver and/or an emitter, configured to come into communication with a corresponding emitter or receiver of another measuring head. During the step of deriving the attitude parameter, the measuring heads 34, 34' of the first pair are operatively mounted on the front wheels in such a way as to view (detect) each other; similarly, during the step of deriving the attitude parameter, the measuring heads 35, 35' of the second pair are operatively mounted on the rear wheels in such a way as to view (detect) each other; furthermore, each measuring head of the first pair 34, 34' views (detects) a corresponding head of the second pair 35, 35' (positioned on the same side of the vehicle 9).

In an embodiment, the step of generating positioning data includes communication between a control device, connected to the control unit 11, and the measuring heads 34, 34', 35, 35' of the first or the second pair of measuring heads, associated with the vehicle 9, and corresponding measuring heads 33, 33' associated with the support structure 3 (each comprising an emitter and/or a receiver). More specifically, the control device sequentially polls the individual measuring heads 33, 33', 34, 34', 35, 35' (for example, through a radio communication with proprietary protocol) and communicates to the control unit 11 the data received from the measuring heads 33, 33', 34, 34', 35, 35' in response (for example, via Bluetooth or Wi-Fi or through a USB port).

The measuring heads 33, 33', 34, 34', 35, 35' polled by the control device transmit data to the control device as a function of the detections performed by the respective emitters/receivers. The control unit 11 thus generates the positioning data 52 based on the data transmitted by the measuring heads 33, 33', 34, 34', 35, 35'. The detections performed by the measuring heads 33, 33', 34, 34', 35, 35' are thus used to provide aid with positioning.

Also, the control unit 11 has access to a memory 12 containing characterization data 51 that represent a position of the service surface S relative to a spatial reference system. The spatial reference system is defined by a vertical axis V, a transverse axis T and a longitudinal axis L. In the spatial reference system, a horizontal reference plane S0 is defined which is parallel to the transverse axis T and to the longitudinal axis L and perpendicular to the vertical axis V. The control unit 11 is configured to retrieve the characterization data 51 from the memory and to generate the positioning data 52 as a function of the characterization data 51.

The apparatus 1 comprises one or more inclination indicators 71, such as, for example, mechanical or electronic levels, associated with the support structure 3. The inclination indicators 72 are used to provide assistance with positioning. More specifically, the apparatus 1 comprises a first inclination indicator 71 used to detect the inclination of the support structure 3, or of the calibration device 41, relative to the transverse axis T and/or a second inclination indicator 71 used to detect the inclination of the support structure 3, or of the calibration device 41, relative to the longitudinal axis L.

The positioning data 52 include one or more correction factors to assist with the positioning of the support structure 3 at the working position. The one or more correction factors are configured to correct an inclination value provided by the one or more inclination indicators 71.

Thus, positioning the support structure 3 will have the effect of varying the inclination of the support structure 3 relative to the longitudinal axis L and/or relative to the transverse axis T to reach the inclination values specified by the manufacturer, corrected according to the one or more correction factors.

In addition, the one or more correction factors are configured to correct a vertical adjustment of the support structure 3 (for example, an adjustment of the supporting feet 21 or an adjustment of a carriage associated with the calibration device 41 and slidable on the support structure 3) to vary the height of the calibration device 41 relative to the service surface S. The control unit 11 is configured to query the memory 12 to retrieve the characterization data 51 based on the vehicle information 54 (for example, the dimensions or model of the vehicle 9, the relative position between the calibration device and the vehicle, etc.).

The control unit 11 is also configured to derive the characterization data 51 from the measurement data 53.

This disclosure also relates to a method for calibrating an advanced driver assistance (ADAS) sensor of a vehicle 9 using the apparatus 1 described in this disclosure.

The method comprises a step of the control unit 11 generating positioning data 52 to facilitate positioning the support structure 3 at a working position in proximity to the service area 8. The control unit 11 generates the positioning data 52 as a function of the characterization data 51 that represent a position of the service surface S relative to a spatial reference system. The control unit 11 retrieves the characterization data 51 from a memory 12 where they have been stored.

The method comprises a step of sending a calibration command to an electronic control unit 95 of the vehicle 9 to determine an interaction between the ADAS sensor and the calibration device 41. The method comprises a step of processing data received from the electronic control unit 95 of the vehicle 9.

In an embodiment, the method also comprises a step of characterizing, in which the control unit 11 determines the characterization data 51 and stores them in the memory 12 for use at a later stage, during the calibration procedure.

The step of characterizing comprises measuring the measurement data 53 representing a vertical distance of four points P1, P2, P3, P4 of the service surface S relative to a horizontal reference plane S0.

Before measuring, the step of characterizing involves positioning the support structure 3 horizontally, with the aid of an inclination indicator 71 (that is, a level) associated with the support structure 3 and oriented in parallel with the longitudinal direction L and the transverse direction T. Preferably, the horizontal plane in which the inclination indicator 71 is oriented defines the horizontal reference plane S0.

Preferably, positioning the support structure 3 horizontally is carried out by adjusting the supporting feet 21.

For each point P1, P2, P3, P4, the operator positions a graduated rod 75 (for example, a rod indicating a distance) positioned vertically on the service surface S at the point P1, P2, P3, P4. The operator then operates on a distance meter 72 that emits a horizontal laser beam (along the horizontal reference plane S0); it should be noted that, in this context, the plane in which the distance meter 72 emits a laser beam preferably coincides with (or is parallel to) the horizontal plane identified by the inclination indicator 71. Thus, the laser beam is emitted by the distance meter 72 in such a way as to be parallel to the inclination indicator 71 (for example because it is placed on the same flat supporting surface).

The operator then reads off the graduated rod 75 the height at which the laser beam strikes the graduated rod 75.

As regards positioning the distance meter 72, attention is drawn to the following.

Preferably, the distance meter 72 is (removably) connected to the support structure 3. In an embodiment, the distance meter 72 is connected to the horizontal bar 30 of the support structure 3. Preferably, the horizontal bar 30 (or any other part of the support structure 3 which the distance meter 72 is designed to be fastened to) is provided with a graduated scale along the transverse direction T. That way, when the operator positions the distance meter 72 on the support structure 3, he/she may conveniently find the transverse distance at which it is positioned relative to a reference origin defined on an axis oriented in the transverse direction T. In an example embodiment, the apparatus 1 comprises a housing configured to receive the distance meter 72 in such a way as to keep it in a predetermined position relative to the housing. For example, the housing can be removably associated with the horizontal bar 30 or is slidably coupled to the horizontal bar 30 itself. Preferably, the housing includes a (horizontal) bottom wall, adapted to supportably receive the distance meter 72, and a substantially vertical rear wall, configured to define an abutment, or stop, which prevents the distance meter 72 from moving further along the longitudinal direction L; this has the advantage of ensuring that in all the distance measurements performed with the distance meter 72 (along the longitudinal direction), the distance meter 72 is located at the same distance along the longitudinal direction L (thereby increasing measuring precision). The housing also includes two side walls configured to limit the movements of the distance meter 72 positioned in the housing (interposed between the side walls) along the transverse direction.

Preferably, the points P1, P2, P3 and P4, if projected onto a horizontal plane, (that is, viewed from above) are aligned with each other in twos, in parallel with the longitudinal axis L and in parallel with the transverse axis T (and thus define a rectangle). More specifically, the points P1 and P2, viewed from above, are aligned in parallel with the longitudinal axis L; the points P1 and P3, viewed from above, are aligned in parallel with the transverse axis T; the points P3 and P4, viewed from above, are aligned in parallel with the longitudinal axis L (and spaced from the points P1 and P2); and the points P2 and P4, viewed from above, are aligned in parallel with the transverse axis T (and spaced from the points P1 and P3).

Thus, when the graduated rod 75 is positioned on the point P1, the operator reads the vertical distance h1 of the point P1 relative to the horizontal reference plane S0. When the graduated rod 75 is positioned on the point P2, the operator reads the vertical distance h2 of the point P2 relative to the horizontal reference plane S0. The measurement data 53 include the vertical distance h1 of the point P1, the vertical distance h2 of the point P2 and the vertical distances of the points P3 and P4. The measurement data 53 also include, for each point P1, P2, P3, P4, a transverse distance (along the transverse axis T) and a longitudinal distance (along the longitudinal dimension L). The longitudinal distance may be obtained by reading the distance detected by the distance meter 72. The distance meter 72 is slidably coupled to the horizontal bar 30 to move thereon along the transverse direction T; the horizontal bar 30 is provided with an adhesive label bearing a millimetre scale (that is to say, the horizontal bar 30 is graduated). The transverse distance of each point P1, P2, P3 and P4 may be obtained by reading off the horizontal bar 30 the distance at which the distance meter 72 is positioned when it emits a laser beam at the graduated rod 75 positioned at the point P1, P2, P3 and P4.

The step of characterizing comprises receiving the measurement data 53 in the control unit 11 and processing the measurement data 53 to generate the characterization data 51. Processing the measurement data 53 includes deriving a service plane S1 which approximates the service surface S. The service plane S1 may be derived by minimizing the (mean) quadratic errors between the service plane and the three-dimensional coordinates of the four points P1, P2, P3, P4.

In an embodiment, the vertical height h0 of the distance meter 72 is measured relative to a zone of the service surface S which the base unit 2 of the support structure 3 is resting on. The vertical height h0 may be derived from a measurement performed with the height distance meter 38, mounted on the support structure 3.

Further, the vertical height h0 is processed to derive a height difference Δh between the service surface S (real) and the service plane S1 (which approximates the service surface S) in the zone which the base unit 2 of the support structure 3 rests on. The height difference Δh may also form part of the measurement data 53 and may therefore be used to generate the characterization data 51 and hence the positioning data 52. For example, the positioning data 52 may include instructions to adjust the support structure 3 and/or the calibration device 41 in height in order to compensate for the height difference Δh.

In an embodiment, the apparatus 1 includes a laser blade emitter 73, configured to emit one or more laser blades.

The laser blade emitter 73 may be used alternatively to the distance meter 72 as an aid to detect the measurement data 53. In effect, in an embodiment, the laser blade emitter 73 is placed at a known position in the three-dimensional reference system (for example, at the intersection between the longitudinal axis L, the transverse axis T and the vertical axis V). The laser blade emitter 73 includes a level for emitting the laser blades 731 and 732 according to predetermined orientations. More specifically, the laser blade emitter 73, when it at the known position, is configured to emit a horizontal laser blade 731 and a vertical laser blade 732; the horizontal laser blade 731 is parallel to the longitudinal axis L and to the transverse axis T, whilst the vertical laser blade 732 is parallel to the vertical axis V. The horizontal laser blade 731 is parallel to the horizontal reference plane S0 and preferably itself defines the horizontal reference plane S0. The laser blade emitter 73 is rotatable about a vertical axis to vary the orientation of the vertical laser blade 732. The operator positions the graduated rod 75 vertically on the service surface S at each point P1, P2, P3 and P4 and reads off the graduated rod 75 the vertical distance at which the horizontal blade 731 strikes the graduated rod 75. Also, when the vertical laser blade 732 is oriented in parallel with the longitudinal axis L and with the vertical axis V, the operator measures, for example with the graduated rod 75 or with a tape measure positioned in parallel with the transverse axis T, a transverse distance between the laser blade 732 and each of the points P1, P2, P3 and P4. Also, when the vertical laser blade 732 is oriented in parallel with the longitudinal axis L and with the vertical axis V, the operator measures, for example with the graduated rod 75 or with the tape measure positioned in parallel with the transverse axis T, a longitudinal distance between the laser blade 732 and each of the points P1, P2, P3 and P4.

In an embodiment, the apparatus 1 comprises a characterization bar 77 extending in a direction A of the bar. The apparatus 1 comprises a first spacer 76A and a second spacer 76B, associated with the characterization bar 77 and at least one of which is slidable along the direction A of the bar; spacers which are not slidable on the bar and on which the bar is simply rested may also be used. Preferably, the characterization bar includes a graduated scale from which the operator can read the position of the first spacer 76A and of the second spacer 76B. The characterization bar 77 is also associated with an inclination indicator 71, configured to detect the inclination of the characterization bar 77 relative to the vertical direction V. The operator positions the characterization bar 77 on the service surface S, oriented along the transverse direction T (hence with the direction A of the bar parallel to the transverse direction T), with the first and second spacers 76A and 76B resting on the points P1 and P3 and spaced by a first distance D1, and reads off a second inclination value measured by the inclination indicator 71. After that (or before that), the operator positions the characterization bar 77 on the service surface S, oriented along the longitudinal direction L (hence with the direction A of the bar parallel to the longitudinal direction L), with the first and second spacers 76A and 76B resting on the points P1 and P2 and spaced by a second distance D2, and reads off a first inclination value measured by the inclination indicator 71. After that (or before that), the operator positions the characterization bar 77 on the service surface S, oriented along the longitudinal direction L, with the first and second spacers 76A and 76B resting on the points P3 and P4 and spaced by a second distance D2, and reads off a third inclination value measured by the inclination indicator 71. After that (or before that), the operator, in a possible embodiment, positions the characterization bar 77 on the service surface S, oriented along the transverse direction T, with the first and second spacers 76A and 76B resting on the points P2 and P4 and spaced by a second distance D1, and reads off a fourth inclination value measured by the inclination indicator 71. The operator communicates to the control unit 11 the first, second, third (and fourth) inclination values, together with the distances between the first and the second spacers 76A, 76B during the inclination measurements; from these, the control unit 11 derives the service plane S0.

In an embodiment, the apparatus 1 includes a reference element 74, positioned on the service surface S (the reference element 74 may form part of the service surface S itself). The reference element 74 is defined by a stripe painted (or glued) on the service surface S, parallel to the transverse axis T, and visible to the operator to indicate where the vehicle 9 must be positioned with the front (or rear) wheels positioned on the stripe. In addition or alternatively, a further reference element, defined by a further stripe, parallel to the longitudinal axis L, may be provided to indicate where the operator must position the vehicle 9 with the right-hand (or left-hand) wheels positioned on the further stripe. Preferably, the stripe defining the reference element 74 passes through two of the points (for example, through points P1 and P3). Thus, during interaction between the ADAS sensor and the calibration device 41, the vehicle 9 has two wheels positioned on the service surface S at the reference element 74. In addition, the apparatus 1 may also include a camera which sees the stripe and the vehicle wheels which must be positioned on the stripe; the images captured by the camera are transmitted to a screen (a tablet, for example) visible to the operator.

The reference element 74 may include vertical marks - for example, painted (or glued) on a wall or on a suitable substrate.

In an embodiment, the vertical distances of a plurality of pairs of points of the service surface S can be detected relative to the horizontal reference plane S0, where the points of each pair are aligned along a transverse axis of the pair (parallel to the transverse axis T); the transverse axes of the pairs of the plurality of pairs are parallel to, and spaced from, each other. Thus obtained is a plurality of service planes S, each of which is derived on the basis of the vertical distance of two pairs of the plurality of pairs. In this embodiment, the method comprises a step of receiving in the control unit 11 an information item indicating the distance between front wheels and rear wheels of the vehicle 9 and, based on that distance, selecting a service plane S from among the plurality of service planes S (the one which best approximates the surface on which the vehicle 9 is resting); the control unit 11 thus generates the positioning data 52 as a function of the inclination of the selected service plane S relative to the horizontal reference plane S0.

## Claims

1. A method for calibrating an advanced driver assistance (ADAS) sensor of a vehicle (9), using a calibrating apparatus (1) including a support structure (3) and a calibration device (41) mounted on the support structure (3), the vehicle (9) being operatively rested on a service surface (S) of a service area (8), the method comprising the following steps:
- generating by means of a control unit (11) positioning data (52) to facilitate positioning the support structure (3) at a working position in proximity to the service area (8);
- sending a calibration command to an electronic control unit (95) of the vehicle (9) to determine an interaction between the ADAS sensor and the calibration device (41);
- processing data received from the electronic control unit (95) of the vehicle (9) in order to generate calibration data;
**characterized in that** the control unit (11) retrieves characterization data (51), previously saved and representing a position of the service surface (S) relative to a spatial reference system, and generates the positioning data (52) as a function of the characterization data (51).

2. The method according to claim 1, wherein the spatial reference system includes a horizontal reference plane (S0) and wherein the control unit (11) generates the positioning data (52) as a function of a deviation between the service surface (S) and the horizontal reference plane (S0).

3. The method according to claim 2, wherein the positioning data (52) include one or more correction factors to assist with the positioning of the support structure (3) at the working position to allow correcting an inclination value provided by one or more inclination indicators (71) included in the calibrating apparatus.

4. The method according to claim 3, comprising a step of moving the support structure (3) by means of one or more actuators connected to the control unit (11), wherein the one or more actuators move the support structure (3) as a function of the further correction factors

5. The method according to any one of the preceding claims, wherein the control unit (11) has access to a database (12) containing a plurality of characterization datasets, the method comprising a step of receiving vehicle information (54) in the control unit (11) and a step of querying the database (12) to select a characterization dataset from the plurality of characterization datasets (51), based on the vehicle information (54).

6. The method according to claim 5, wherein the vehicle (9) comprises a pair of front wheels, including a right-hand front wheel and a left-hand, front wheel, and pair of rear wheels, including a right-hand rear wheel and a left-hand, rear wheel, and wherein the vehicle information (54) includes one or more of the following information items:
- the distance between the pair of front wheels and the pair of rear wheels of the vehicle (9);
- the distance between the right-hand front wheel and the left-hand front wheel of the vehicle (9);
- the location of the vehicle (9) within the service area (8) relative to the spatial reference system;
- the location of the support structure (3) relative to the vehicle (9).

7. The method according to any one of the preceding claims, wherein the calibration device (41) includes a target panel (412) to show a combination of graphical features visible to a camera of the vehicle (9) in response to the calibration command, wherein the control unit (11) displays on the surface of the target panel (40) an image that provides the combination of graphical features and perspectively deforms the image as a function of the characterization data (51).

8. The method according to any one of the preceding claims, comprising a step of characterizing the service surface (S), including the following steps:
- receiving in the control unit (11) measurement data (53) representing three-dimensional coordinates of at least three points of the service surface (S) relative to a reference system including a horizontal reference plane (S0);
- processing the measurement data (53) to generate the characterization data (51); and.
- storing the characterization data (51).

9. The method according to claim 8, wherein one of the following conditions is verified:
i) the spatial reference system includes a horizontal reference plane (S0), wherein the step of processing the measurement data (53) includes deriving a service plane (S1) which approximates the service surface (S) and wherein the positioning data (52) are generated as a function of an inclination of the service plane relative to the horizontal reference plane (S0), or
-ii) the measurement data (53) represent three-dimensional coordinates of at least four points (P1, P2, P3, P4) of the service surface (S) relative to the reference system including the horizontal reference plane (S0), wherein the service plane is derived by an operation of minimizing the (mean) quadratic errors between the service plane (S) and the three-dimensional coordinates of the at least four points (P1, P2, P3, P4).

10. The method according to any one of claim 8 to 9, wherein the step of characterizing includes capturing the measurement data (53) and further meets one of the following conditions:
(i) the measurement data (53) are captured by emitting a light beam directed at a graduated rod (75) oriented along a vertical direction and resting on the service surface (S) at one of the at least three points, wherein the light beam is oriented in parallel with the horizontal reference plane (S0);(ii) capturing the measurement data (53) in turn includes the following sub-steps:
- positioning a first and a second spacer (76A, 76B) on the service surface (S) in such a way that a characterization bar (77) connected to the first and the second spacer (76A, 76B) is oriented along a longitudinal direction (L) of the service area (8);
- measuring a first inclination of the characterization bar (77) oriented along the longitudinal direction (L);
- positioning the first and the second spacer (76A, 76B) on the service surface (S) in such a way that the characterization bar (77) is oriented along a transverse direction (T) of the service area (8);
- measuring a second inclination of the characterization bar (77) oriented along the transverse direction (T).

11. The method according to any one of claims 8 to 10, wherein the service surface is defined by a vehicle lift that may be positioned in a plurality of operating configurations and wherein the step of characterizing may be repeated in two or more of the operating configurations and/or with two or more different loads placed on the vehicle lift.

12. An apparatus (1) for calibrating an advanced driver assistance (ADAS) sensor of a vehicle (9), the vehicle (9) being operatively rested on a service surface (S) of a service area (8), wherein the apparatus (1) comprises:
- a support structure (3);
- a calibration device (41) mounted on the support structure (3);
- a control unit (11) configured to generate positioning data (52) to facilitate positioning the support structure (3) at a working position in proximity to the service area (8),
**characterized in that** the control unit (11) has access to a memory (12) containing characterization data (51) that represent a position of the service surface (S) relative to a spatial reference system and is configured to retrieve the characterization data (51) from the memory and to generate the positioning data (52) as a function of the characterization data (51).

13. The apparatus (1) according to claim 12, comprising one or more inclination indicators (71), connected to the support structure (3) and configured to detect an inclination of the support structure (3) relative to the spatial reference system to assist with the positioning of the support structure (3) at the working position, wherein the positioning data (52) include one or more correction factors for the one or more inclination indicators (71).

14. A computer program comprising operating instructions configured to perform the steps of the method according to any one of claims 1 to 9, when run on a control unit (11) of an apparatus (1) according to claim 12 or 13.

15. A method for characterizing a service surface (S) of a service area (8) for calibrating an advanced driver assistance (ADAS) sensor of a vehicle (9), calibration being performed using a calibration device (41) with the vehicle (9) resting on the service surface (S) of the service area (8), the method comprising the following steps:
- capturing measurement data (53) representing a vertical distance of at least three points of the service surface (S) relative to a horizontal reference plane (S0);
- processing the measurement data (53) to generate the characterization data (51) representing a deviation of the service surface (S) relative to the horizontal reference plane (S0);
- storing the characterization data (51) in a memory.

## Patentansprüche

1. Verfahren zum Kalibrieren eines Advanced Driver Assistance-(ADAS)-Sensors eines Fahrzeugs (9) unter Verwendung einer Kalibriervorrichtung (1), die eine Stützstruktur (3) und eine an der Stützstruktur (3) montierte Kalibriereinrichtung (41) einschließt, wobei das Fahrzeug (9) betriebswirksam auf einer Servicefläche (S) eines Servicebereichs (8) aufliegt, wobei das Verfahren die folgenden Schritte umfasst:
- Erzeugen von Positionierungsdaten (52) mittels einer Steuereinheit (11), um das Positionieren der Stützstruktur (3) an einer Arbeitsposition in der Nähe des Servicebereichs (8) zu erleichtern;
- Senden eines Kalibrierungsbefehls an eine elektronische Steuereinheit (95) des Fahrzeugs (9), um eine Wechselwirkung zwischen dem ADAS-Sensor und der Kalibriereinrichtung (41) zu bewirken;
- Verarbeiten von Daten, die von der elektronischen Steuereinheit (95) des Fahrzeugs (9) empfangen werden, um Kalibrierungsdaten zu erzeugen; **dadurch gekennzeichnet, dass** die Steuereinheit (11) Charakterisierungsdaten (51) zurückholt, die zuvor gespeichert wurden und eine Position der Servicefläche (S) relativ zu einem räumlichen Referenzsystem darstellen, und die die Positionierungsdaten (52) als Funktion der Charakterisierungsdaten (51) erzeugt.

2. Verfahren nach Anspruch 1, wobei das räumliche Referenzsystem eine horizontale Referenzebene (S0) einschließt und wobei die Steuereinheit (11) die Positionierungsdaten (52) als Funktion einer Abweichung zwischen der Servicefläche (S) und der horizontalen Referenzebene (S0) erzeugt.

3. Verfahren nach Anspruch 2, wobei die Positionierungsdaten (52) einen oder mehrere Korrekturfaktoren einschließen, um die Positionierung der Stützstruktur (3) an der Arbeitsposition zu unterstützen, um ein Korrigieren eines Neigungswerts zu ermöglichen, der von einem oder mehreren Neigungsindikatoren (71) in der Kalibriervorrichtung bereitgestellt ist.

4. Verfahren nach Anspruch 3, umfassend einen Schritt zum Bewegen der Stützstruktur (3) mittels eines oder mehrerer Aktuatoren, die mit der Steuereinheit (11) verbunden sind, wobei der eine oder die mehreren Aktuatoren die Stützstruktur (3) als Funktion der weiteren Korrekturfaktoren bewegen.

5. Verfahren nach einem der vorhergehenden Ansprüche, wobei die Steuereinheit (11) Zugriff auf eine Datenbank (12) hat, die eine Vielzahl von Charakterisierungsdatensätzen enthält, wobei das Verfahren einen Schritt zum Empfangen von Fahrzeuginformationen (54) in der Steuereinheit (11) und einen Schritt zum Abfragen der Datenbank (12) umfasst, um einen Charakterisierungsdatensatz aus der Vielzahl von Charakterisierungsdatensätzen (51) basierend auf den Fahrzeuginformationen (54) auszuwählen.

6. Verfahren nach Anspruch 5, wobei das Fahrzeug (9) ein Paar Vorderräder, einschließlich eines rechten Vorderrads und eines linken Vorderrads, und ein Paar Hinterräder, einschließlich eines rechten Hinterrads und eines linken Hinterrads, umfasst, und wobei die Fahrzeuginformationen (54) eines oder mehrere der folgenden Informationselemente einschließen:
- den Abstand zwischen dem Paar Vorderräder und dem Paar Hinterräder des Fahrzeugs (9);
- den Abstand zwischen dem rechten Vorderrad und dem linken Vorderrad des Fahrzeugs (9);
- die Position des Fahrzeugs (9) innerhalb des Servicebereichs (8) relativ zum räumlichen Referenzsystem;
- die Position der Stützstruktur (3) relativ zum Fahrzeug (9) .

7. Verfahren nach einem der vorangehenden Ansprüche, wobei die Kalibriereinrichtung (41) eine Zieltafel (412) einschließt, um eine Kombination von grafischen Merkmalen anzuzeigen, die für eine Kamera des Fahrzeugs (9) als Reaktion auf den Kalibrierungsbefehl sichtbar sind, wobei die Steuereinheit (11) auf der Oberfläche der Zieltafel (40) ein Bild anzeigt, das die Kombination von grafischen Merkmalen bereitstellt, und das Bild als Funktion der Charakterisierungsdaten (51) perspektivisch verformt.

8. Verfahren nach einem der vorangehenden Ansprüche, umfassend einen Schritt zum Charakterisieren der Serviceoberfläche (S), einschließlich der folgenden Schritte:
- Empfangen von Messdaten (53) in der Steuereinheit (11), die dreidimensionale Koordinaten von mindestens drei Punkten der Servicefläche (S) relativ zu einem Referenzsystem darstellen, das eine horizontale Referenzebene (S0) einschließt;
- Verarbeiten der Messdaten (53), um die Charakterisierungsdaten (51) zu erzeugen; und
- Speichern der Charakterisierungsdaten (51).

9. Verfahren nach Anspruch 8, wobei eine der folgenden Bedingungen verifiziert wird:
i) das räumliche Referenzsystem eine horizontale Referenzebene (S0) einschließt, wobei der Schritt zum Verarbeiten der Messdaten (53) das Ableiten einer Serviceebene (S1) einschließt, die die Servicefläche (S) annähert, und wobei die Positionierungsdaten (52) als Funktion einer Neigung der Serviceebene relativ zur horizontalen Referenzebene (S0) erzeugt werden, oder
ii) die Messdaten (53) dreidimensionale Koordinaten von mindestens vier Punkten (P1, P2, P3, P4) der Servicefläche (S) relativ zum Referenzsystem einschließlich der horizontalen Referenzebene (S0) darstellen, wobei die Serviceebene durch eine Operation zum Minimieren der (mittleren) quadratischen Fehler zwischen der Serviceebene (S) und den dreidimensionalen Koordinaten der mindestens vier Punkte (P1, P2, P3, P4) abgeleitet wird.

10. Verfahren nach einem der Ansprüche 8 bis 9, wobei der Charakterisierungsschritt das Erfassen der Messdaten (53) einschließt und ferner eine der folgenden Bedingungen erfüllt:
(i) die Messdaten (53) erfasst werden, indem ein Lichtstrahl emittiert wird, der auf einen entlang einer vertikalen Richtung orientierten und auf der Servicefläche (S) aufliegenden Messstab (75) an einem der mindestens drei Punkte gerichtet ist, wobei der Lichtstrahl parallel zur horizontalen Referenzebene (S0) orientiert ist; (ii) das Erfassen der Messdaten (53) wiederum folgende Teilschritte einschließt:
- Positionieren eines ersten und eines zweiten Abstandshalters (76A, 76B) auf der Servicefläche (S), sodass eine mit dem ersten und dem zweiten Abstandshalter (76A, 76B) verbundene Charakterisierungsstange (77) entlang einer Längsrichtung (L) des Servicebereichs (8) orientiert wird;
- Messen einer ersten Neigung der entlang der Längsrichtung (L) orientierten Charakterisierungsstange (77);
- Positionieren des ersten und des zweiten Abstandshalters (76A, 76B) auf der Servicefläche (S), sodass die Charakterisierungsstange (77) entlang einer Querrichtung (T) des Servicebereichs (8) orientiert wird;
- Messen einer zweiten Neigung der Charakterisierungsstange (77), die entlang der Querrichtung (T) orientiert ist.

11. Verfahren nach einem der Ansprüche 8 bis 10, wobei die Servicefläche durch eine Fahrzeughebebühne definiert ist, die in mehreren Betriebskonfigurationen positioniert werden kann, und wobei der Charakterisierungsschritt in zwei oder mehr der Betriebskonfigurationen und/oder mit zwei oder mehr unterschiedlichen Lasten, die auf der Fahrzeughebebühne platziert werden, wiederholt werden kann.

12. Vorrichtung (1) zum Kalibrieren eines Advanced Driver Assistance-(ADAS)-Sensors eines Fahrzeugs (9), wobei das Fahrzeug (9) betriebswirksam auf einer Servicefläche (S) eines Servicebereichs (8) aufliegt, wobei die Vorrichtung (1) umfasst:
- eine Stützstruktur (3);
- eine Kalibriereinrichtung (41), die an der Stützstruktur (3) montiert ist;
- eine Steuereinheit (11), die konfiguriert ist, um Positionierungsdaten (52) zu erzeugen, um das Positionieren der Stützstruktur (3) an einer Arbeitsposition in der Nähe des Servicebereichs (8) zu erleichtern,
**dadurch gekennzeichnet, dass** die Steuereinheit (11) Zugriff auf einen Speicher (12) hat, der Charakterisierungsdaten (51) enthält, die eine Position der Servicefläche (S) relativ zu einem räumlichen Referenzsystem darstellen, und dazu konfiguriert ist, die Charakterisierungsdaten (51) aus dem Speicher zurückzuholen und die Positionierungsdaten (52) als Funktion der Charakterisierungsdaten (51) zu erzeugen.

13. Vorrichtung (1) nach Anspruch 12, umfassend einen oder mehrere Neigungsindikatoren (71), die mit der Stützstruktur (3) verbunden und konfiguriert sind, um eine Neigung der Stützstruktur (3) relativ zum räumlichen Referenzsystem zu detektieren, um sie beim Positionieren der Stützstruktur (3) an der Arbeitsposition zu unterstützen, wobei die Positionierungsdaten (52) einen oder mehrere Korrekturfaktoren für den einen oder die mehreren Neigungsindikatoren (71) einschließen.

14. Computerprogramm, das Betriebsanweisungen umfasst, die dazu konfiguriert sind, die Schritte des Verfahrens nach einem der Ansprüche 1 bis 9 auszuführen, wenn es auf einer Steuereinheit (11) einer Vorrichtung (1) nach Anspruch 12 oder 13 ausgeführt wird.

15. Verfahren zum Charakterisieren einer Servicefläche (S) eines Servicebereichs (8) zum Kalibrieren eines Advanced Driver Assistance-(ADAS)-Sensors eines Fahrzeugs (9), wobei die Kalibrierung unter Verwendung einer Kalibriereinrichtung (41) mit dem auf der Servicefläche (S) des Servicebereichs (8) aufliegenden Fahrzeug (9) durchgeführt wird, wobei das Verfahren die folgenden Schritte umfasst:
- Erfassen von Messdaten (53), die einen vertikalen Abstand von mindestens drei Punkten der Servicefläche (S) relativ zu einer horizontalen Referenzebene (S0) darstellen;
- Verarbeiten der Messdaten (53), um die Charakterisierungsdaten (51) zu erzeugen, die eine Abweichung der Servicefläche (S) relativ zu der horizontalen Referenzebene (S0) darstellen;
- Speichern der Charakterisierungsdaten (51) in einem Speicher.

## Revendications

1. Procédé pour calibrer un capteur de système avancé d'aide à la conduite (ADAS) d'un véhicule (9), utilisant un appareil de calibrage (1) incluant une structure de support (3) et un dispositif de calibrage (41) monté sur la structure de support (3), le véhicule (9) reposant de manière fonctionnelle sur une surface de service (S) d'une zone de service (8), le procédé comprenant les étapes suivantes :
- générer au moyen d'une unité de commande (11) des données de positionnement (52) pour faciliter le positionnement de la structure de support (3) en correspondance d'une position de travail à proximité de la zone de service (8) ;
- envoyer une commande de calibrage à une unité de commande électronique (95) du véhicule (9) pour déterminer une interaction entre le capteur de système avancé d'aide à la conduite (ADAS) et le dispositif de calibrage (41) ;
- traiter les données reçues de l'unité de commande électronique (95) du véhicule (9) afin de générer des données de calibrage ;
**caractérisé en ce que** l'unité de commande (11) récupère des données de caractérisation (51), préalablement sauvegardées et représentant une position de la surface de service (S) par rapport à un système de référence spatial, et génère les données de positionnement (52) en fonction des données de caractérisation (51).

2. Procédé selon la revendication 1, dans lequel le système de référence spatial comprend un plan de référence horizontal (S0) et dans lequel l'unité de commande (11) génère les données de positionnement (52) en fonction d'un écart entre la surface de service (S) et le plan de référence horizontal (S0).

3. Procédé selon la revendication 2, dans lequel les données de positionnement (52) incluent un ou plusieurs facteurs de correction pour assister le positionnement de la structure de support (3) en correspondance de la position de travail pour permettre de corriger une valeur d'inclinaison fournie par un ou plusieurs indicateurs d'inclinaison (71) inclus dans l'appareil de calibrage.

4. Procédé selon la revendication 3, comprenant une étape consistant à déplacer la structure de support (3) au moyen d'un ou plusieurs actionneurs reliés à l'unité de commande (11), dans lequel l'un ou plusieurs actionneurs déplacent la structure de support (3) en fonction des autres facteurs de correction.

5. Procédé selon l'une quelconque des revendications précédentes, dans lequel l'unité de commande (11) a accès à une base de données (12) contenant une pluralité d'ensembles de données de caractérisation, le procédé comprenant une étape de réception d'informations sur le véhicule (54) dans l'unité de commande (11) et une étape consistant à interroger la base de données (12) pour sélectionner un ensemble de données de caractérisation parmi la pluralité d'ensembles de données de caractérisation (51), sur la base des informations sur le véhicule (54).

6. Procédé selon la revendication 5, dans lequel le véhicule (9) comprend une paire de roues avant, incluant une roue avant droite et une roue avant gauche, et une paire de roues arrière, incluant une roue arrière droite et une roue arrière gauche, et dans lequel les informations sur le véhicule (54) comprennent un ou plusieurs des éléments d'information suivants :
- la distance entre la paire de roues avant et la paire de roues arrière du véhicule (9) ;
- la distance entre la roue avant droite et la roue avant gauche du véhicule (9) ;
- l'emplacement du véhicule (9) à l'intérieur de la zone de service (8) par rapport au système de référence spatiale ;
- l'emplacement de la structure de support (3) par rapport au véhicule (9).

7. Procédé selon l'une quelconque des revendications précédentes, dans lequel le dispositif de calibrage (41) comprend un panneau cible (412) servant à présenter une combinaison de caractéristiques graphiques visibles par une caméra du véhicule (9) en réponse à la commande de calibrage, dans lequel l'unité de commande (11) affiche sur la surface du panneau cible (40) une image qui fournit la combinaison de caractéristiques graphiques et déforme en perspective l'image en fonction des données de caractérisation (51).

8. Procédé selon l'une quelconque des revendications précédentes, comprenant une étape de caractérisation de la surface de service (S), incluant les étapes suivantes :
- recevoir dans l'unité de commande (11) des données de mesure (53) représentant des coordonnées tridimensionnelles d'au moins trois points de la surface de service (S) par rapport à un système de référence incluant un plan de référence horizontal (S0) ;
- traiter les données de mesure (53) pour générer les données de caractérisation (51) ; et
- stocker les données de caractérisation (51).

9. Procédé selon la revendication 8, dans lequel l'une des conditions suivantes est vérifiée :
i) le système de référence spatial comprend un plan de référence horizontal (S0), dans lequel l'étape de traitement des données de mesure (53) inclut la dérivation d'un plan de service (S1) qui s'approche de la surface de service (S) et dans lequel les données de positionnement (52) sont générées en fonction d'une inclinaison du plan de service par rapport au plan de référence horizontal (S0), ou
ii) les données de mesure (53) représentent les coordonnées tridimensionnelles d'au moins quatre points (P1, P2, P3, P4) de la surface de service (S) par rapport au système de référence comprenant le plan de référence horizontal (S0), dans lequel le plan de service est dérivé par une opération de minimisation des erreurs quadratiques (moyennes) entre le plan de service (S) et les coordonnées tridimensionnelles des au moins quatre points (P1, P2, P3, P4).

10. Procédé selon l'une quelconque des revendications 8 à 9, dans lequel l'étape de caractérisation inclut la capture des données de mesure (53) et satisfait de plus à l'une des conditions suivantes :
(i) les données de mesure (53) sont capturées en émettant un faisceau lumineux dirigé vers une tige graduée (75) orientée le long d'une direction verticale et reposant sur la surface de service (S) en correspondance de l'un des au moins trois points, dans lequel le faisceau lumineux est orienté parallèlement au plan de référence horizontal (S0) ; (ii) la capture des données de mesure (53) comprend à son tour les sous-étapes suivantes :
- positionner une première et une deuxième entretoise (76A, 76B) sur la surface de service (S) de telle sorte qu'une barre de caractérisation (77) reliée à la première et à la deuxième entretoise (76A, 76B) soit orientée dans une direction longitudinale (L) de la zone de service (8) ;
- mesurer une première inclinaison de la barre de caractérisation (77) orientée le long de la direction longitudinale (L) ;
- positionner la première et la seconde entretoise (76A, 76B) sur la surface de service (S) de telle sorte que la barre de caractérisation (77) est orientée le long d'une direction transversale (T) de la zone de service (8) ;
- mesurer une seconde inclinaison de la barre de caractérisation (77) orientée selon la direction transversale (T).

11. Procédé selon l'une quelconque des revendications 8 à 10, dans lequel la surface de service est définie par un pont élévateur qui peut être positionné dans une pluralité de configurations de fonctionnement et dans lequel l'étape de caractérisation peut être répétée dans deux ou plusieurs des configurations de fonctionnement et/ou avec deux ou plusieurs charges différentes placées sur le pont élévateur.

12. Appareil (1) pour calibrer un capteur de système avancé d'aide à la conduite (ADAS) d'un véhicule (9), le véhicule (9) reposant de manière fonctionnelle sur une surface de service (S) d'une zone de service (8), dans lequel l'appareil (1) comprend :
- une structure de support (3) ;
- un dispositif de calibrage (41) monté sur la structure de support (3) ;
- une unité de commande (11) configurée pour générer des données de positionnement (52) pour faciliter le positionnement de la structure de support (3) en correspondance d'une position de travail à proximité de la zone de service (8),
**caractérisé en ce que** l'unité de commande (11) a accès à une mémoire (12) contenant des données de caractérisation (51) qui représentent une position de la surface de service (S) par rapport à un système de référence spatiale et est configurée pour récupérer les données de caractérisation (51) de la mémoire et pour générer les données de positionnement (52) en fonction des données de caractérisation (51).

13. Appareil (1) selon la revendication 12, comprenant un ou plusieurs indicateurs d'inclinaison (71) reliés à la structure de support (3) et configurés pour détecter une inclinaison de la structure de support (3) par rapport au système de référence spatial pour assister le positionnement de la structure de support (3) en correspondance de la position de travail, dans lequel les données de positionnement (52) incluent un ou plusieurs facteurs de correction pour l'un ou plusieurs indicateurs d'inclinaison (71).

14. Programme informatique comprenant des instructions d'exploitation configurées pour exécuter les étapes du procédé selon l'une quelconque des revendications 1 à 9, lorsqu'il est exécuté sur une unité de commande (11) d'un appareil (1) selon la revendication 12 ou 13.

15. Procédé de caractérisation d'une surface de service (S) d'une zone de service (8) servant à calibrer un capteur de système avancé d'aide à la conduite (ADAS) d'un véhicule (9), le calibrage étant réalisé à l'aide d'un dispositif de calibrage (41) avec le véhicule (9) reposant sur la surface de service (S) de la zone de service (8), le procédé comprenant les étapes suivantes :
- capturer des données de mesure (53) représentant une distance verticale d'au moins trois points de la surface de service (S) par rapport à un plan de référence horizontal (S0) ;
- traiter les données de mesure (53) pour générer les données de caractérisation (51) représentant une déviation de la surface de service (S) par rapport au plan de référence horizontal (S0) ;
- stocker les données de caractérisation (51) dans une mémoire.
